# EUROPÄISCHE PATENTANMELDUNG

(11) **EP 0 994 315 A1**
(43) Veröffentlichungstag der Anmeldung: **19.04.2000**
(21) Anmeldenummer: 99810922.7
(22) Anmeldetag: 11.10.1999
(51) Int. Cl.: F24J 2/04

(54) **Dacheinbaumodul für solartechnische Anlagen**

(30) Priorität: 13.10.1998 CH 205898
(71) Anmelder: Elka AG, 6300 Zug (CH)
(72) Erfinder: Welker, Heinrich R., 77652 Offenburg (DE)
(74) Vertreter: Kägi, Otto Patentanwalt

(57) **Zusammenfassung**

Mit dem Modul soll durch geeignete Gestaltung und Vorfertigung am Gehäuse (10) ein einfacher Dacheinbau ermöglicht werden, ohne dass kostspielige und zeitraubende Anpassungs- und Facharbeit auf der Baustelle nötig ist. Das einen Rahmen bildende Gehäuse (10) ist in der Breite (b) und in der Höhe (h) auf die Ziegelteilung (Tb, Th) abgestimmt, so dass allseitig immer ganze Ziegel (1) anschliessen. Alle vier Gehäuse-Seitenwände (12, 13, 14, 15) des Rahmens weisen nach aussen kragenartig abstehende Leitbleche (16, 17, 18, 19) auf. Diese sind zum Unter- bzw. Übergreifen der angrenzenden Ziegel (1) bestimmt. Die von der linken bzw. der rechten Seitenwand (12 bzw. 14) abstehenden Leitbleche (16 bzw. 18) sind unterbrochen und entsprechend der Längsüberdeckung der Ziegel (1) überdeckend gestaffelt.

## Beschreibung

Die Erfindung betrifft ein Dacheinbaumodul für solartechnische Anlagen, mit einem einen rechteckigen oder quadratischen Rahmen bildenden, zum Einbau in eine Ziegeldeckung bestimmten Gehäuse, welches in der Breite und in der Höhe auf die Ziegelteilung abgestimmt ist und von allen vier Seitenwänden des Rahmens nach aussen kragenartig abstehende Leitbleche aufweist.

Module dieser Art werden verwendet, wenn die "aktiven" Teile einer Solaranlage - Photovoltaik-Zellen oder solarthermische Komponenten - in ein Gebäudedach integriert werden sollen. Bereits bekannte Ausführungen solcher Module bedingen bei der Montage - sei es bereits während dem Erstellen des Daches und seiner Ziegeldeckung oder erst beim nachträglichen Einbau - in der Regel aufwendige Dachdecker- und Spenglerarbeiten: An das Modulgehäuse angrenzende Dachziegel müssen zugeschnitten werden, und es müssen Blechschürzen angebracht und gegenüber dem Gehäuse und den Ziegeln abgedichtet werden. Dies erfordert zuverlässige Facharbeit auf der Baustelle, was hohe Kosten und häufig auch Terminprobleme verursacht.

Aus der EP-A 0 029 180 ist ein Einbaumodul der eingangs genannten Art bekannt. Dabei ist das Gehäuse zusammen mit den Leitblechen einstückig aus Kunststoff ausgeführt. Die seitlichen Leitbleche sind so breit, dass bis zu einer halben Ziegelbreite ausgeglichen werden kann. Die Ziegel sollen zwar die Leitbleche auf der einen Seite über- und auf der anderen Seite untergreifen, jedoch ist unklar, wie bei der gezeigten Gestaltung ein dichter Anschluss der einander längs überdeckenden Ziegel gelingen kann.

Mit der vorliegenden Erfindung wird eine zweckmässige Gestaltung solcher Einbaumodule angestrebt, die eine rasche und einfache Dachmontage auch durch Nichtfachleute ermöglicht, wobei die regelmässige, überlappte Anordnung der Ziegelreihen nicht gestört werden darf. Damit sollen drastische Kosteneinsparungen besonders bei nachträglichem Einbau erzielt werden.

Das erfindungsgemässe Dacheinbaumodul, mit dem diese Aufgabe gelöst wird, ist dadurch gekennzeichnet, dass die zum Unter-bzw. Übergreifen der seitlich angrenzenden Ziegel bestimmten, von der linken bzw. von der rechten Seitenwand abstehenden Leitbleche unterbrochen und entsprechend der Längsüberdeckung der Ziegel überdeckend gestaffelt sind.(Die Begriffe "Höhe" des Gehäuses und "Längsüberdeckung" bzw. "Längsrichtung" der Dachziegel werden im vorliegenden Zusammenhang mit Bezug auf die Richtung der Dachschräge angewendet).

Das in dieser Weise vorgefertigte Modul kann in Baumärkten für den Selbsteinbau durch Laien angeboten werden und ermöglicht einen fachgerechten, zuverlässig dichten Dacheinbau ohne den Beizug von Fachleuten. Aber auch den Facharbeitern bietet die Erfindung eine beträchtliche Zeit-, Material- und Kostenersparnis. Es sind ohne weiteres Ausführungen des Moduls möglich, die den Transport in Personenwagen oder Kleintransportern und die Handhabung durch eine einzelne Person erlauben. Ein wichtiger Gesichtspunkt ist auch, dass der Gruppeneinbau mehrerer nebeneinander und/oder übereinander angeordneter Module mit schmalen Zwischenräumen - entsprechend der (geringen) Breite der Leitbleche - möglich ist, damit ein hoher Solar-Ausnutzungsgrad der belegten Gesamtfläche erzielt wird.

Zweckmässige, besondere Ausgestaltungen des im Patentanspruch 1 definierten Erfindungsgegenstandes sind in den abhängigen Ansprüchen 2 bis 5 angegeben. Nachstehend wird die Erfindung anhand eines Ausführungsbeispiels und in Verbindung mit der Zeichnung näher erläutert.
- Fig. 1: ist die Draufsicht eines in einem Ziegeldach montierten erfindungsgemässen Einbaumoduls;
- Fig. 2: ist eine Ansicht des Moduls von links in Fig. 1, in etwas grösserem Massstab (Dachziegel strichpunktiert angedeutet), und
- Fig. 3: zeigt in einem nochmals grösseren Masstab die linke und die rechte Seitenpartie des Moduls mit angrenzenden Ziegeln, im Schnitt senkrecht zur Dachfläche entlang der Linie III-III in Fig. 1.

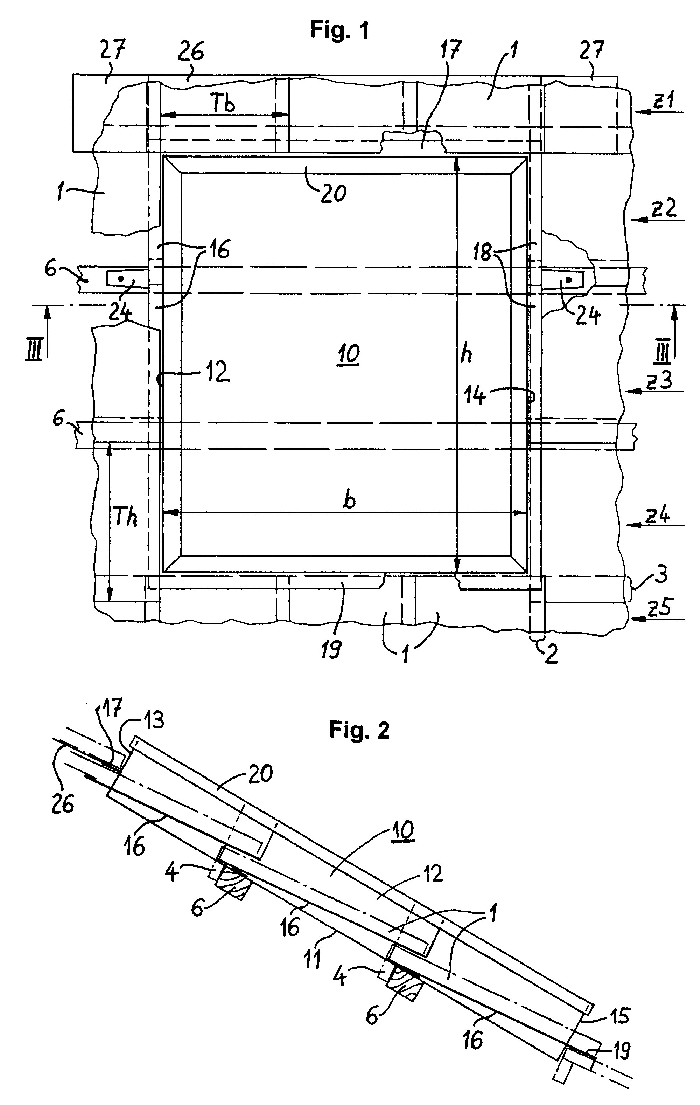

Das Modul mit dem rechteckigen (oder je nach Ziegeldeckung allenfalls quadratischen) Gehäuse 10 ist wie dargestellt in einem Schrägdach eingebaut. Das Dach besteht im wesentlichen aus der Lattung (Latten 6) und der von dieser getragenen Ziegeldeckung aus rechteckigen Ziegeln 1. Wie üblich sind die Ziegel 1 in horizontalen Reihen z1....z5 angeordnet und überlappen sich jeweils seitlich und in der Länge (Seitenüberdeckung 2 und Längsüberdeckung 3 gemäss Fig. 1). Jeder Ziegel 1 übergreift mit seiner Nase 4 am oberen Rand eine Latte 6 (Fig. 2). Die Lattung dient auch als Auflage für das Modulgehäuse 10; in der Zeichnung sind nur die beiden unter dem Gehäuse durchlaufenden Latten 6 dargestellt. Zur Befestigung des Gehäuses auf der Lattung sind z.B. seitliche Blechlappen 24 vorgesehen. Das Modulgehäuse 10 dient in bekannter Weise zur Aufnahme der weiter oben erwähnten "aktiven" Teile einer Solaranlage. Diese Teile werden in der Regel erst nachträglich in das Gehäuse eingesetzt und sind hier nicht dargestellt. Die Gehäusetiefe, d.h. die Höhe der Seitenwände, richtet sich vor allem nach den genannten Einbauteilen.

Wie vor allem aus der Fig. 1 hervorgeht, ist das Gehäuse 10 in der Breite b wie auch in der Höhe h auf die Ziegelteilung - Tb in der Breite und Th in der Höhe - derart abgestimmt, dass eine ganze Zahl von Ziegelteilungen Tb bzw. Th abzüglich einer Seitenüberdeckung 2 bzw. einer Längsüberdeckung 3 vom Gehäuse eingenommen wird (mit Berücksichtigung eines allseitigen Spiels von etwa lcm). Das Gehäuse 10 ist also rings von ganzen Ziegeln umgeben, d.h. es sind keinerlei Zuschnitte an diesen erforderlich. Vorzugsweise nimmt das Gehäuse, wie in Fig. 1 gezeigt, eine Öffnung in der Ziegeldeckung von drei mal drei Ziegeln ein. Geht man beispielsweise von einem Ziegelformat von 34cm in der Breite und 42cm in der Höhe sowie einer Seitenüberdeckung von 3cm und einer Längsüberdeckung von 6cm aus, so beträgt Tb = 31cm und Th = 36cm. Dann berechnet sich - mit allseitigem Spiel von 1cm - die Gehäusebreite b zu 88cm und die Gehäusehöhe h zu 100cm. Mit solchen Abmessungen und entsprechend geringem Gewicht kann das Einbaumodul bequem von einer Person allein getragen und montiert werden.

Das Einbaumodul ist in bestimmter Weise vorgefertigt, vorzugsweise aus Kupferblech, wobei das Gehäuse 10 einen Rahmen mit den Seitenwänden 12, 13, 14 und 15 bildet. Wie nachfolgend ausgeführt, ist der dichte Anschluss der Ziegeldeckung an das Gehäuse 10 gewährleistet, ohne dass bei der Montage auf dem Dach irgendwelche Anpassarbeiten, wie Anbringen und Abdichten von Blechschürzen usw. notwendig sind. Hierfür sind alle vier Seitenwände des Gehäuses mit kragenartig nach aussen abstehenden Leitblechen 16, 17, 18 und 19 versehen. Diese Leitbleche sind mit dem Gehäuse 10 dichtend verbunden und zum Unter- bzw. Übergreifen der angrenzenden Ziegel 1 bestimmt. Sie werden nachstehend im einzelnen beschrieben:

An der oberen Seitenwand 13 ist ein Leitblech 17 angebracht (Fig. 1 und 2), das die angrenzenden Ziegel der Reihe z1 untergreift, d.h. der untere Rand dieser Ziegel liegt auf dem Blech 17 auf. Im Hinblick auf einen möglichen Wasser-Rückstau an der Seitenwand 13 bei starken Regengüssen ist das Blech 17 durch ein Zusatzblech 26 nach oben verbreitert. Am letzteren schliessen seitliche Lappen 27 an, die das seitlich abfliessende Wasser auf die angrenzenden Ziegel der Reihe z2 leiten. Die Lappen 27 liegen also unter der Reihe z1 und (im Bereich der Längsüberdeckung der Ziegel) über der Reihe z2. Sie sind zweckmässigerweise (zur Verwendung mit welligen Ziegeln) aus weichem, schmiegsamem Material, z.B. Bleiblech gefertigt. Vorzugsweise ist das Zusatzblech 26 (mit den Lappen 27) am Leitblech 17 lösbar befestigt, aus Gründen, die weiter unten angegeben sind.

Die untere Gehäuse-Seitenwand 15 ist mit einem dicht anschliessenden Leitblech 19 versehen. Dieses übergreift den oberen Rand der anschliessenden Ziegel der Reihe z5. Im Falle von Ziegeln mit gewellter Oberfläche kann der untere Rand des Bleches 19, wie in Fig. 2 angedeutet, nach unten abgekantet und der Ziegeloberfläche angepasst sein.

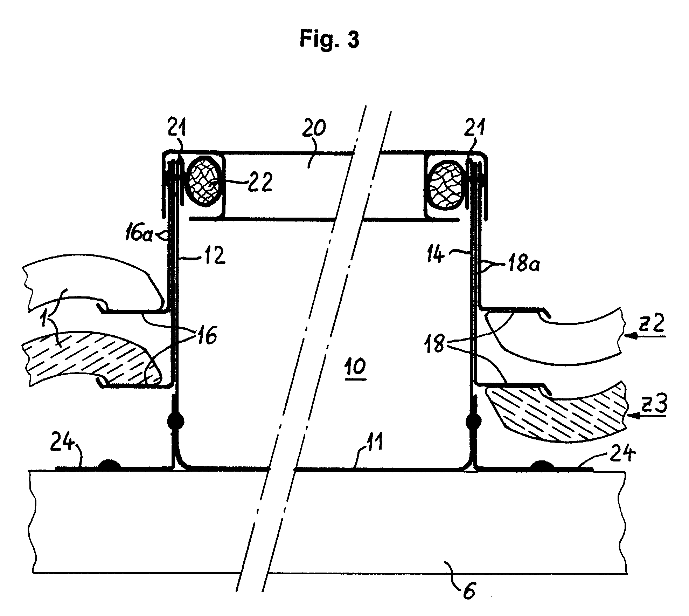

Leitbleche 16 an der linken Seitenwand 12 und Leitbleche 18 an der rechten Seitenwand 14 des Gehäuses 10 sind besonders gestaltet, um der Längsüberdeckung der Ziegel Rechnung zu tragen. Dies geht vor allem aus den Fig. 2 und 3 hervor. Die Leitbleche 16 und 18 sind in Richtung der Dachschräge unterbrochen und entsprechend den Ziegeln überdeckend gestaffelt. Dies bedingt auch, dass die Bleche 16 und 18 in Längsrichtung der Ziegel in bezug auf den Gehäuseboden "ansteigen". Bei der gegebenen seitlichen Überdeckungsfolge der Ziegel untergreifen die Bleche 16 jeweils die links angrenzenden Ziegel der Reihen z2, z3 und z4, während die Bleche 18 die rechts angrenzenden Ziegel übergreifen, was insbesondere aus der Fig. 3 hervorgeht.

Um bei der Fertigung des Moduls die seitlich auskragenden Leitbleche dichtend mit dem Gehäuse zu verbinden, bestehen grundsätzlich verschiedene Möglichkeiten, z.B. die Verwendung von Fugendichtmassen, Löten usw.. Als besonders geeignet wird jedoch die dargestellte Lösung erachtet, gemäss welcher mindestens die links und rechts abstehenden Bleche 16 und 18 (ggf. aber auch die Bleche 17 und 19) als Winkelbleche ausgebildet sind, wobei der eine Schenkel 16a, 18a an der Seitenwand 12 bzw. 14 anliegt und bis zu deren Oberkante 21 reicht (Fig. 3). Die zuverlässige, dauerhafte Abdichtung wird durch einen am Gehäuse 10 umlaufenden Deckahmen 20 erreicht, der die Oberkante 21 der Seitenwände wie auch der betreffenden Schenkel der Leitbleche überdeckt. Der Rahmen 20 kann als Träger für die in das Gehäuse einzubauenden Anlageteile und/oder für eine Verglasung dienen (nicht dargestellt); er ist zweckmässig mittels einer Ringdichtung 22 zum Gehäuse 10 abgedichtet.

Bei Bedarf, je nach Grösse der jeweiligen Solaranlage, können ohne weiteres mehrere der dargestellten Module aneinander anschliessend eingebaut werden. Wie leicht einzusehen ist, stellen dann die einander über- bzw. untergreifenden Leitbleche benachbarter Module die dichte Verbindung her. Kommen mehrere Module in der Dachschräge übereinander zu liegen, so ist das Zusatzblech 26 nur am jeweils obersten Modul erforderlich und bei den untenliegenden Modulen zu entfernen, so dass dann das Leitblech 19 des obenliegenden Moduls direkt das Leitblech 17 des untenliegenden Moduls übergreift. Bei einem solchen Gruppeneinbau ist es besonders vorteilhaft, dass die Abstände der benachbarten Module bzw. Rahmen jeweils nur der (in Bezug auf die Rahmen-Abmessungen geringen) Breite eines Seitenbleches entspricht. Dadurch steht ein hoher Anteil der insgesamt belegten Fläche für die aktiven Solarteile zur Verfügung, d.h. es wird ein entsprechend hoher Ausnutzungsgrad erzielt.

## Patentansprüche

1. Dacheinbaumodul für solartechnische Anlagen, mit einem einen rechteckigen oder quadratischen Rahmen bildenden, zum Einbau in eine Ziegeldeckung (1) bestimmten Gehäuse (10), welches in der Breite (b) und in der Höhe (h) auf die Ziegelteilung (Tb, Th) abgestimmt ist und von allen vier Seitenwänden (12, 13, 14, 15) des Rahmens nach aussen kragenartig abstehende Leitbleche (16, 17, 18, 19) aufweist,
dadurch **gekennzeichnet**, dass die zum Unter- bzw. Übergreifen der seitlich angrenzenden Ziegel (1) bestimmten, von der linken bzw. von der rechten Seitenwand (12 bzw. 14) abstehenden Leitbleche (16 bzw. 18) unterbrochen und entsprechend der Längsüberdeckung der Ziegel (1) überdeckend gestaffelt sind.

2. Dacheinbaumodul nach Anspruch 1, dadurch gekennzeichnet, dass mindestens die von der linken und von der rechten Seitenwand abstehenden Leitbleche (16 bzw. 18) als Winkelbleche ausgebildet sind, deren einer Schenkel (16a, 18a) an der betreffenden Seitenwand (12 bzw. 14) anliegend bis zu deren Oberkante (21) reicht.

3. Dacheinbaumodul nach Anspruch 2, gekennzeichnet durch einen die Oberkanten (21) der Seitenwände (12, 13, 14, 15) und der betreffenden Schenkel (16a, 18a) der Leitbleche (16, 18) überdeckenden, umlaufenden Deckrahmen (20).

4. Dacheinbaumodul nach einem der vorangehenden Ansprüche, dadurch gekennzeichnet, dass das von der oberen Gehäuse-Seitenwand (13) abstehende Leitblech (17) durch ein lösbar befestigtes Zusatzblech (26) nach oben verbreitert ist.

5. Dacheinbaumodul nach einem der vorangehenden Ansprüche, dadurch gekennzeichnet, dass das Gehäuse (10) eine Öffnung von drei mal drei Ziegeln (1) in der Ziegeldeckung einnimmt.
